(19) Europäisches Patentamt
European Patent Office
Office européen des brevets

(11) EP 3 871 762 A1

(12) **EUROPEAN PATENT APPLICATION**
published in accordance with Art. 153(4) EPC

(43) Date of publication:
**01.09.2021 Bulletin 2021/35**

(21) Application number: **19874973.1**

(22) Date of filing: **17.10.2019**

(51) Int Cl.:
***B01F 17/12*** (2006.01) ***B01F 17/20*** (2006.01)
***B01F 17/42*** (2006.01) ***C08F 2/24*** (2006.01)
***C08F 2/26*** (2006.01) ***C08F 290/06*** (2006.01)

(86) International application number:
**PCT/JP2019/040841**

(87) International publication number:
**WO 2020/085182 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2018 JP 2018201966**

(71) Applicant: **DKS Co. Ltd.**
**Kyoto-shi, Kyoto 600-8873 (JP)**

(72) Inventors:
- **KIMURA Takuro**
  **Kyoto-shi,**
  **Kyoto 600-8873 (JP)**
- **JOYABU Masatake**
  **Kyoto-shi,**
  **Kyoto 600-8873 (JP)**

(74) Representative: **TBK**
**Bavariaring 4-6**
**80336 München (DE)**

(54) **SURFACTANT COMPOSITION, AQUEOUS RESIN DISPERSION, AND METHOD FOR PRODUCING SAME**

(57) Provided is a surfactant composition having the capability of not only imparting excellent polymerization stability, but also imparting excellent mechanical stability to the aqueous resin dispersion to be obtained through emulsion polymerization, even when the amount of the surfactant composition used is small.

The surfactant composition includes a surfactant (A) and an anionic surfactant (B) having no radical polymerizable substituent, where

the surfactant (A) is a compound represented by a general formula (I)

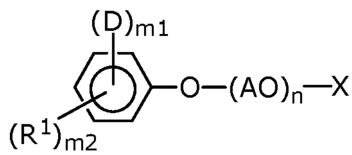

· · · (I)

(in which D represents a polymerizable unsaturated group; $R^1$ represents a group having an aromatic ring; m1 is 1 to 2, m2 is 1 to 2, and a sum of numbers m1 and m2 is 2 to 3; A represents an alkylene group or a substituted alkylene group having a carbon number of 2 to 4; n is an average number of moles of alkylene oxide added and is 1 to 1000; and X represents an anionic hydrophilic group) and

the surfactant (B) contains a polyoxyalkylene group which has a repeating number of an oxyalkylene unit of 1 to 10.

EP 3 871 762 A1

## Description

Technical Field

The present invention relates to a surfactant composition and an aqueous resin dispersion.

Background Art

Recently, in consideration of the earth environment and working environment, the shift from organic solvents to aqueous systems has been actively underway in various fields of, for example, adhesives, coating materials, and paints. In view of this, the usefulness of aqueous resin dispersions is extremely high and they have been suitably used as raw materials in such various fields. Simultaneously, a greater demand has been placed on the performance, quality, and other characteristics of aqueous resin dispersions.

It is known that an aqueous resin dispersion can be produced, for example, by a method using an emulsion polymerization method or other such methods. In this emulsion polymerization method, in an aqueous medium, in the presence of a surfactant, while a polymerizable compound such as a polymerizable monomer is emulsified, a polymerization reaction is performed to thereby obtain an aqueous resin dispersion. The method has an advantage of, for example, having the capability of easily and speedily producing an aqueous resin dispersion.

Due to its use of a surfactant, the emulsion polymerization method has problems such as the likelihood of the occurrence of foam in an aqueous resin dispersion, the likelihood of the deterioration of the water resistance of, for example, a coating film formed from the aqueous resin dispersion, and the likelihood of the dissolution of a surfactant from the coating film, and thus various suggestions for improvement have been made. For example, PTL 1 discloses a surfactant having the capability of imparting polymerization stability, even with a small amount thereof, to minimize the influence of the surfactant during emulsion polymerization.

Citation List

Patent Literature

PTL 1: Japanese Unexamined Patent Application Publication No. 2000-33255

Summary of Invention

Technical Problem

However, according to the existing surfactant disclosed in PTL 1, when an aqueous resin dispersion is obtained with a decreased amount of the surfactant used, in the case where strong shearing is applied to the aqueous resin dispersion, the problem of the likelihood of the occurrence of aggregates is caused, thus preventing the aqueous resin dispersion from having sufficient mechanical stability. In view of this, a surfactant not only having excellent polymerization stability during the production of an aqueous resin dispersion but also having the capability of enhancing the mechanical stability of the aqueous resin dispersion obtained, even when the amount of the surfactant used is small, has been desired.

The present invention has been made in light of the above and has an object to provide a surfactant composition having the capability of not only imparting excellent polymerization stability, but also imparting excellent mechanical stability to the aqueous resin dispersion to be obtained through emulsion polymerization, even when the amount of the surfactant composition used is small. Solution to Problem

As a result of intensive studies repeatedly conducted in an effort to achieve the object, the present inventors have found that the object is achievable by combining a radical polymerizable surfactant having a specific structure and an anionic surfactant having a specific structure, thereby completing the present invention.

That is, the present invention includes, for example, the subject matters disclosed in the Items below.

Item 1 A surfactant composition including: a surfactant (A); and an anionic surfactant (B) having no radical polymerizable substituent, wherein
the surfactant (A) is a compound represented by a general formula (I) below

[Chem. 1]

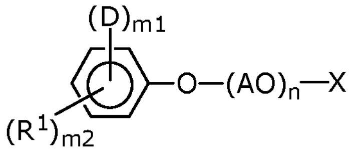

· · · (I)

(wherein D represents a polymerizable unsaturated group represented by either of formulas (D-1) and (D-2) below

[Chem. 2]

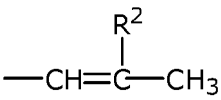

(D-1)

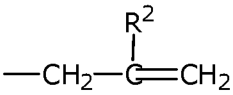

(D-2)

in which each $R^2$ represents hydrogen or a methyl group; $R^1$ represents at least one kind of group selected from the group consisting of formulas (R-1), (R-2), and (R-3) below;

[Chem. 3]

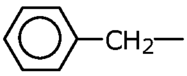

(R-1)

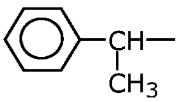

(R-2)

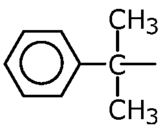

(R-3)

m1 is 1 to 2, m2 is 1 to 2, and a sum of numbers m1 and m2 is 2 to 3; A represents an alkylene group or a substituted alkylene group having a carbon number of 2 to 4; n is an average number of moles of alkylene oxide added and is 1 to 1000; and X represents an anionic hydrophilic group represented by either of
$-(CH_2)_a-SO_3M$ (in which a is a number 0 to 4),
$-(CH_2)_b-COOM$ (in which b is a number 0 to 4),
$-PO_3M_2$,
$-P(Z)O_2M$ (in which Z represents a residue in which X is removed from the formula (I)), and
$-CO-CH_2-CH(SO_3M)-COOM$
(in which each M represents hydrogen, an alkali metal, an alkaline earth metal, an ammonium residue, or an alkanolamine residue)) and
the surfactant (B) contains a polyoxyalkylene group which has a repeating number of an oxyalkylene unit of 1 to 10.
Item 2 The surfactant composition according to Item 1, wherein the surfactant (B) is at least one kind selected from the group consisting of a polyoxyalkylene styrenated phenyl ether sulfuric acid ester salt, a polyoxyalkylene alkyl ether sulfuric acid ester salt, and a polyoxyalkylene alkenyl ether sulfuric acid ester salt.
Item 3 The surfactant composition according to Item 1 or 2, wherein 40 to 200 parts by mass of the surfactant (B) is included with respect to 100 parts by mass of the surfactant (A) .
Item 4 An aqueous resin dispersion obtained by subjecting a polymerizable compound to emulsion polymerization in a presence of the surfactant composition according to any one of Items 1 to 3.
Item 5 A production method for an aqueous resin dispersion, the method including a step of obtaining an aqueous resin dispersion by subjecting a polymerizable compound to emulsion polymerization in a presence of the surfactant

composition according to any one of Items 1 to 3.

Advantageous Effects of Invention

According to the surfactant composition according to the present invention not only excellent polymerization stability can be imparted, but also excellent mechanical stability can be imparted to the aqueous resin dispersion to be obtained through emulsion polymerization, even when the amount of the surfactant composition used is small.

According to the aqueous resin dispersion according to the present invention, because the aqueous resin dispersion is produced using the surfactant composition, its surfactant content is small and it has excellent mechanical stability. Description of Embodiments

Hereafter, embodiments of the present invention will be described in detail. In the present specification, the expressions "contain" and "include" encompass the concepts of "contain", "include", "consist essentially of", and "consist only of".

A surfactant composition according to the present invention includes a surfactant (A) and an anionic surfactant (B) having no radical polymerizable substituent. Hereafter, the surfactant composition according to the present invention will be simply referred to as the "surfactant composition".

In the surfactant composition, the surfactant (A) is a compound represented by the formula (I) above and the surfactant (B) contains a polyoxyalkylene group which has a repeating number of an oxyalkylene unit of 1 to 10. In other words, the polyoxyalkylene group has 1 to 10 oxyalkylene units.

Because the surfactant composition includes the surfactant (A) and the surfactant (B), not only excellent polymerization stability can be imparted, but also excellent mechanical stability can be imparted to the aqueous resin dispersion obtained through emulsion polymerization, even when the amount of the surfactant composition used is small.

<Surfactant (A)>

Various compounds can be adopted as the surfactant (A), as long as they are compounds represented by the formula (I) above. The surfactant (A) has a polymerizable unsaturated group and thus is a so-called reactive surfactant, specifically, a surfactant exhibiting radical polymerizability.

In a compound represented by the formula (I), $R^1$ is at least one kind of group selected from the group consisting of the formulas (R-1), (R-2), and (R-3) above. Among these, $R^1$ is preferably a substituent represented by (R-2). In the formula (I), m2 is an average substitution number of $R^1$ and is a number 1 to 2. Furthermore, m2 may be a number 1.05 to 1.8.

In a compound represented by the formula (I), D represents a polymerizable unsaturated group represented by either of the formulas (D-1) and (D-2) above. In the formulas (D-1) and (D-2), each $R^2$ represents hydrogen or a methyl group. Thus, the polymerizable unsaturated group represented by the formula (D-1) is a 1-propenyl group or a 2-methyl-1-propenyl group and the polymerizable unsaturated group represented by the formula (D-2) is an allyl group or a methallyl group.

In the formula (I), the position at which D is bonded is not particularly limited, and, for example, the substitution position of D is preferably an ortho position (the 2-position or 6-position). In the formula (I), m1 is an average substitution number of D and is a number 1 to 2. In view of the likelihood of preventing or reducing the occurrence of foam and the likelihood of enhancing the mechanical stability of an aqueous resin dispersion, m1 is preferably 1 to 1.5.

In view of the likelihood of preventing or reducing the occurrence of foam and the likelihood of enhancing the mechanical stability of an aqueous resin dispersion, D preferably includes at least a polymerizable unsaturated group represented by the formula (D-1). D may be only a polymerizable unsaturated group represented by the formula (D-1) or may have both a polymerizable unsaturated group represented by the formula (D-1) and a polymerizable unsaturated group represented by the formula (D-2). When D has both polymerizable unsaturated groups, the ratio (D-1)/(D-2), namely, the ratio of the number of the polymerizable unsaturated group represented by the formula (D-1) to the number of the polymerizable unsaturated group represented by the formula (D-2) is preferably 2 or more.

In the formula (I), A represents an alkylene group or a substituted alkylene group having a carbon number of 2 to 4, and thus AO is an oxyalkylene group having a carbon number of 2 to 4 or an oxyalkylene group having a carbon number of 2 to 4 optionally having a substituent. Examples of the AO include oxyalkylene groups having a carbon number of 2 such as an oxyethylene group; oxyalkylene groups having a carbon number of 3 such as an oxypropylene group, an oxy-1-methylethylene group, and an oxy-2-methylethylene group; and oxyalkylene groups having a carbon number of 4 such as an oxybutylene group, an oxy-1-methylpropylene group, an oxy-2-methylpropylene group, an oxy-3-methylpropylene group, an oxy-1,2-dimethylethylene group, and an oxy-1-ethylethylene group.

Considering in terms of the capability of not only imparting excellent polymerization stability, but also imparting excellent chemical stability and mechanical stability to an aqueous resin dispersion, the AO preferably contains an oxyalkylene group having a carbon number of 2 and more preferably contains an oxyethylene group. In view of the

same, the content of an oxyalkylene group having a carbon number of 2 is preferably 50 mol% to 100 mol% and more preferably 70 mol% to 100 mol% in the AO.

In the formula (I), n is an average number of moles of AO (alkylene oxide) added and is a number 0 to 1000. Among these, in view of further excellence in polymerization stability, chemical stability, and mechanical stability, a number greater than 0 is preferable, 1 or more is more preferable, and 3 or more is even more preferable. In view of further excellence in polymerization stability and the ease of controlling the average particle size of a resin in an aqueous resin dispersion, 100 or less is preferable, 70 or less is more preferable, and 50 or less is even more preferable.

In the formula (I), X represents an anionic hydrophilic group represented by either of $-(CH_2)_a-SO_3M$, $-(CH_2)_b-COOM$, $-PO_3M_2$, $-P(Z)O_2M$, and $-CO-CH_2-CH(SO_3M)-COOM$. In these anionic hydrophilic groups, a and b each represent a number 0 to 4 and Z represents a residue in which X is removed from the formula (I). Each M represents hydrogen, an alkali metal, an alkaline earth metal, an ammonium residue, or an alkanolamine residue.

Examples of the alkali metal include lithium, sodium, and potassium. Examples of the alkaline earth metal include magnesium and calcium. Examples of the ammonium residue include ammonium, monomethylammonium, dimethylammonium, trimethylammonium, monoethylammonium, diethylammonium, triethylammonium, monopropylammonium, dipropylammonium, and tripropylammonium. Examples of the alkanolamine residue include monoethanolammonium, diethanolammonium, and triethanolammonium.

In view of not only the capability of imparting excellent polymerization stability but also the further enhancement of the mechanical stability of an aqueous resin dispersion, the anionic hydrophilic group X is preferably $-(CH_2)_a-SO_3M$, $-PO_3M_2$, or $-P(Z)O_2M$ and more preferably $-SO_3M$, $-PO_3M_2$, or $-P(Z)O_2M$.

The surfactant (A) included in the surfactant composition may be only one kind or two or more kinds.

The production method for a compound represented by the formula (I), namely, the surfactant (A), is not particularly limited, and, for example, publicly known production methods can be widely adopted.

For example, the surfactant (A) can be produced by using a compound in which the anionic hydrophilic group X in the formula (I) is replaced with a hydrogen atom H (hereafter referred to as a "compound C") and substituting the hydrogen atom H in the compound C with X. The compound C can be obtained, for example, by subjecting a phenol derivative having a polymerizable group bonded to an aromatic ring to addition polymerization with alkylene oxide.

The phenol derivative having a polymerizable group bonded to an aromatic ring (hereafter simply referred to as the "phenol derivative") can be obtained by a publicly known production method. For example, the phenol derivative can be produced by a method in which a phenolic compound having a substituent in an aromatic ring and an allyl halide are subjected to a reaction (hereafter referred to as a "production method S1-1"), a method in which a phenol and an allyl halide are subjected to a reaction and thereafter a substituent is introduced into the aromatic ring (hereafter referred to as a "production method S1-2"), and other such methods. The reaction conditions and other such conditions for the production methods S1-1 and S1-2 are not particularly limited, and, for example, publicly known conditions can be widely applied. When the surfactant (A) is produced using the phenol derivative obtained by one of the production methods S1-1 and S1-2, D in the formula (I) is a polymerizable unsaturated group represented by the formula (D-2).

The phenol derivative can also be produced by a method in which the reaction product obtained by subjecting a phenolic compound having a substituent in an aromatic ring and an allyl halide to a reaction is subjected to a Claisen rearrangement reaction in the presence of an alkali catalyst (hereafter referred to as a "production method S2-1"), a method in which a phenol and an allyl halide are subjected to a reaction and thereafter to a Claisen rearrangement reaction in the presence of an alkali catalyst, and subsequently a substituent is introduced into the aromatic ring (hereafter referred to as a "production method S2-2"), and other such methods. As the reaction conditions and other such conditions for the production methods S2-1 and S2-2, for example, publicly known conditions can be widely applied. When the surfactant (A) is produced using the phenol derivative obtained by the production methods S2-1 and S2-2, D in the formula (I) is a polymerizable unsaturated group represented by the formula (D-1). It is not necessary that the reaction rate of the Claisen rearrangement reaction is 100%, and an allyl group or a methallyl group may be remained. The Claisen rearrangement reaction may be performed simultaneously with the introduction of an oxyalkylene group $(AO)_n$ described below.

The method for obtaining the compound C by subjecting the phenol derivative to addition polymerization with alkylene oxide is not particularly limited, and publicly known methods can be widely adopted. For example, the compound C can be obtained by adding a predetermined amount of alkylene oxide to the phenol derivative and thereby introducing an oxyalkylene group $(AO)_n$ thereinto.

The method for substituting the hydrogen atom H in the compound C is with the anionic hydrophilic group X is not particularly limited, and publicly known methods can be widely adopted.

When the anionic hydrophilic group X is $-(CH_2)_a-SO_3M$ (in which a = 0, M is a hydrogen atom), examples of the method for substituting the hydrogen atom H in the compound C with the anionic hydrophilic group X include a method in which the compound C is subjected to a reaction with sulfamic acid, sulfuric acid, sulfuric anhydride, fuming sulfuric acid, or chlorosulfonic acid. By the method, for example, the surfactant (A) in which M is a hydrogen atom is obtained.

When the anionic hydrophilic group X is $-(CH_2)_a-SO_3M$ (in which a = 1 to 4, M is hydrogen), examples of the method for substituting the hydrogen atom H in the compound C with the anionic hydrophilic group X include a method in which the compound C is subjected to a reaction with propane sultone or butane sultone. By the method, the surfactant (A) in which M is a hydrogen atom is obtained.

When the anionic hydrophilic group X is $-(CH_2)_b-COOM$ (in which M is hydrogen), examples of the method for substituting the hydrogen atom H in the compound C with the anionic hydrophilic group X include a method in which the compound C is oxidized and a method in which the compound C is subjected to a reaction with monohalogenated acetic acid. Further examples include a method in which the compound C is subjected to a reaction with acrylonitrile or an acrylic acid ester and thereafter to saponification with an alkali. In these methods, a compound in which the anionic hydrophilic group X in the formula (I) is replaced with an alkali metal can also be used in place of the compound C.

When the anionic hydrophilic group X is $-PO_3M_2$ or $-P(Z)O_2M$ (in which M is hydrogen), examples of the method for substituting the hydrogen atom H in the compound C with the anionic hydrophilic group X include a method in which the compound C is subjected to a reaction with diphosphorus pentoxide, polyphosphoric acid, orthophosphoric acid, or phosphorus oxychloride. In the method, the surfactant (A) in which M is a hydrogen atom is obtained. Here, the $-PO_3M_2$ is a monoester compound and the $-P(Z)O_2M$ is a diester compound, and thus the surfactant (A) is usually obtained as a mixture thereof. In the present invention, the mixture may be used as it is or may be subjected to separation to thereby use only one of the foregoing. Examples of the method for increasing the proportion of the content of the monoester compound include a method in which the above-described reaction is performed in the presence of water.

When the anionic hydrophilic group X is $-CO-CH_2-CH(SO_3M)-COOM$ (in which M is hydrogen), examples of the method for substituting the hydrogen atom H in the compound C with the anionic hydrophilic group X include a method in which the compound C is subjected to a reaction with maleic anhydride to perform monoesterification and thereafter is subjected to a reaction with anhydrous sodium sulfite. By this method, the surfactant (A) in which M is a hydrogen atom is obtained.

Examples of the production method for the surfactant (A) when, in the anionic hydrophilic group X, M is an alkali metal atom, an alkaline earth metal atom, an ammonium residue, or alkanolammonium include a method in which the surfactant (A) in which M is a hydrogen atom obtained by the above-described production methods is subjected to a reaction with an alkali metal hydroxide, an alkaline earth metal hydroxide, an alkylamine, an alkanolamine, or ammonia.

<Surfactant (B)>

As the surfactant (B), publicly known surfactants can be widely applied as long as they have no radical polymerizable substituent and contain a polyoxyalkylene group which has a repeating number of an oxyalkylene unit of 1 to 10, and the kind is not particularly limited. The surfactant (B) has no radical polymerizable substituent and thus is a non-reactive surfactant.

Specific examples of the surfactant (B) include at least one kind of sulfuric acid ester salts, phosphoric acid ester salts, ether carboxylic acid salts, and sulfosuccinic acid salts selected from the group consisting of polyoxyalkylene styrenated phenyl ethers, polyoxyalkylene alkyl ethers, polyoxyalkylene alkenyl ethers, polyoxyalkylene benzylated phenyl ethers, polyoxyalkylene alkyl phenyl ethers, and polyoxyalkylene cumylphenyl ethers. In this case, examples of the salts include salts of alkali metals such as lithium, sodium, and potassium; salts of alkaline earth metals such as magnesium and calcium; alkylammonium salts such as monomethylammonium, dimethylammonium, trimethylammonium, monoethylammonium, diethylammonium, triethylammonium, monopropylammonium, dipropylammonium, and tripropylammonium; alkanolammonium salts such as monoethanolammonium, diethanolammonium, and triethanolammonium; and ammonium salts.

The surfactant (B) is preferably at least one kind selected from the group consisting of a polyoxyalkylene styrenated phenyl ether sulfuric acid ester salt, a polyoxyalkylene alkyl ether sulfuric acid ester salt, and a polyoxyalkylene alkenyl ether sulfuric acid ester salt. In this case, the surfactant composition not only has the capability of imparting excellent polymerization stability, but also is likely to impart excellent chemical stability and mechanical stability to an aqueous resin dispersion.

The surfactant (B) is particularly preferably at least one kind selected from the group consisting of a polyoxyalkylene alkyl ether sulfuric acid ester salt and a polyoxyalkylene alkenyl ether sulfuric acid ester salt.

In the polyoxyalkylene alkyl ether sulfuric acid ester salt and the polyoxyalkylene alkenyl ether sulfuric acid ester salt, an alkyl group and an alkenyl group each preferably have a carbon number of 13 or more, in view of the likelihood of enhancing particularly the mechanical stability of an aqueous resin dispersion. The upper limit of the carbon number of the alkyl group and the alkenyl group can be appropriately set as long as the advantageous effects of the present invention are not impaired. For example, the upper limit of the carbon number of the alkyl group and the alkenyl group may be 20.

In the polyoxyalkylene alkyl ether sulfuric acid ester salt and the polyoxyalkylene alkenyl ether sulfuric acid ester salt, the alkyl group and the alkenyl group may be linear or branched. Particularly when the alkyl group in the

polyoxyalkylene alkyl ether sulfuric acid ester salt is branched, not only the mechanical stability of an aqueous resin dispersion can be enhanced, but also, for example, when a coating film is formed from the aqueous resin dispersion, the water-whitening resistance of the coating film can be enhanced.

When the surfactant (B) includes the polyoxyalkylene alkenyl ether sulfuric acid ester salt, not only the mechanical strength of an aqueous resin dispersion can be enhanced, but also the foaming of the aqueous resin dispersion is likely to be prevented or reduced.

In the surfactant (B), the lower limit of the repeating number of an oxyalkylene unit is preferably 2. The oxyalkylene unit can have a carbon number of 2 to 4.

The surfactant (B) included in the surfactant composition may be only one kind or two or more kinds.

<Surfactant Composition>

In the surfactant composition, the proportion of the contents of the surfactant (A) and the surfactant (B) is not particularly limited. For example, the surfactant composition preferably includes 40 to 200 parts by mass of the surfactant (B) with respect to 100 parts by mass of the surfactant (A). In this case, the surfactant composition has the capability of imparting excellent polymerization stability, and the mechanical stability of an aqueous resin dispersion is likely to be enhanced. The surfactant composition particularly preferably includes 40 to 120 parts by mass of the surfactant (B) with respect to 100 parts by mass of the surfactant (A).

The surfactant composition can include, in addition to the surfactant (A) and the surfactant (B), various additives as long as the advantageous effects of the present invention are not impaired. Examples of the additives include publicly known additives such as solvents, pH adjusters, thickeners, pigments, colorants, and preservatives. When the surfactant composition includes the additives, the content is not particularly limited and can be, for example, 10% by mass or less and particularly preferably 5% by mass or less with respect to the whole mass of the surfactant composition.

Furthermore, the surfactant composition can include, in addition to the surfactant (A) and the surfactant (B), for example, one or more kinds of unreacted products of the raw material used during a step of producing the surfactant (A) and the surfactant (B), intermediates and a bi-products occurring during the step, and other such substances.

The preparation method for the surfactant composition is not particularly limited, and publicly known preparation methods can be widely adopted. For example, the surfactant composition can be obtained by mixing predetermined amounts of the surfactant (A) and the surfactant (B) with an additive included as needed by an appropriate method. The mixing method in this case is not particularly limited, and examples include a method in which a publicly known mixer, stirrer, disperser, and other such apparatuses are used to perform mixing. When the anionic species of the surfactant (A) and the surfactant (B) are the same, the surfactant composition can also be prepared by preparing a mixture of pre-anionized compounds of the surfactant (A) and the surfactant (B) and thereafter anionizing the mixture.

Because the surfactant composition includes the surfactant (A) and the surfactant (B), for example, in the case where the surfactant composition is used as a surfactant for emulsion polymerization (an emulsifier), excellent polymerization stability can be imparted, even when the amount of the surfactant composition used is small. Furthermore, the aqueous resin dispersion obtained through emulsion polymerization has excellent mechanical stability, even when the amount of the surfactant composition used is small. Thus, for example, even in the case where large shearing is applied when the aqueous resin dispersion is used, the occurrence of aggregates is prevented or reduced. Accordingly, the aqueous resin dispersion is easily applied to various uses.

In addition, the aqueous resin dispersion obtained using the surfactant composition has excellent chemical stability and low-foaming properties. Furthermore, a coating film formed with the aqueous resin dispersion has excellent wettability and water-whitening resistance.

Thus, the surfactant composition is suitably used in the fields of, for example, various coating materials, such as aqueous paints, thickeners, adhesives, and binders for paper processing.

<Aqueous Resin Dispersion>

An aqueous resin dispersion according to the present invention can be obtained by subjecting a polymerizable compound to emulsion polymerization in the presence of the above-described surfactant composition.

The kind of the polymerizable compound used in emulsion polymerization is not particularly limited. Examples of the polymerizable compound include a compound having a carbon-carbon unsaturated bond. Examples of the compound having a carbon-carbon unsaturated bond include α, β- unsaturated carboxylic acids, α, β- unsaturated carboxylic acid esters, α, β- unsaturated amides, and unsaturated hydrocarbons.

Examples of the α, β- unsaturated carboxylic acids include (meth)acrylic acid, acrylic acid dimers, crotonic acid, itaconic acid, and maleic acid. In the present specification, "(meth)acrylic" refers to "acrylic" or "methacrylic", "(meth)acrylate" refers to "acrylate" or "methacrylate", and "(meth)allyl" refers to "allyl" or "methallyl".

Examples of the α, β- unsaturated carboxylic acid esters include (meth)acrylic acid monoalkyl esters such as

methyl (meth)acrylate, ethyl (meth)acrylate, n-propyl (meth)acrylate, isopropyl (meth)acrylate, n-butyl meth(acrylate), isobutyl (meth)acrylate, n-hexyl (meth)acrylate, 2-ethylhexyl (meth)acrylate, and cyclohexyl (meth)acrylate; polyol poly(meth)acrylates such as ethylene glycol di(meth)acrylate, diethylene glycol di(meth)acrylate, and triethylene glycol di(meth)acrylate; (meth)acrylic acid fluoroalkyl esters such as trifluoroethyl (meth)acrylate; (meth)acrylic acid hydroxyalkyl esters such as 2-hydroxyethyl (meth)acrylate; epoxy group-containing (meth)acrylic acid esters such as glycidyl (meth)acrylate and allyl glycidyl ethers; alkoxysilyl group-containing (meth)acrylic acid esters such as γ-(meth)acryloxyethyltrimethoxysilane, γ-(meth)acryloxyethyltriethoxysilane, and γ-(meth)acryloxypropyltrimethoxysilane; amino group-containing (meth)acrylic acid esters such as dimethylaminoethyl (meth)acrylate; alkoxy group-containing (meth)acrylic acid esters such as 2-methoxyethyl (meth)acrylate and butoxyethyl (meth)acrylate; and carbonyl group-containing (meth)acrylic acid esters such as 2-(acetoacetoxy)ethyl (meth)acrylate.

Examples of the α, β- unsaturated amides include (meth)acrylamide, N-methylolacrylamide, and butoxy N-methylolacrylamide.

Examples of the unsaturated hydrocarbons include styrene, α-methylstyrene, vinyltoluene, dimethylstyrene, tert-butylstyrene, and divinylbenzene.

In view of the likelihood of the proceeding of a polymerization reaction in emulsion polymerization and the particular excellence in polymerization stability, the polymerizable compound preferably includes an α-β unsaturated carboxylic acid ester and more preferably includes a (meth)acrylic acid ester.

In emulsion polymerization, the polymerization compound may be used in only one kind alone or can be used in a combination of two or more kinds.

Emulsion polymerization can be performed in an aqueous solvent. Examples of the aqueous solvent include water, alcohol, and mixed solvents of water and alcohol. The kind of water is not particularly limited, and examples include various kinds such as distilled water, tap water, industrial water, ion-exchanged water, deionized water, pure water, and electrolyzed water. Examples of the alcohol include a lower alcohol having a carbon number of 1 to 3. Considering in terms of the stable proceeding of emulsion polymerization, the aqueous solvent is preferably water.

In emulsion polymerization, the amount of the surfactant composition used is not particularly limited but can be made small, because the surfactant composition has the capability of imparting excellent polymerization stability as described above.

For example, the total mass amount of the surfactant (A) and the surfactant (B) used is preferably 0.15 parts by mass or more, more preferably 0.5 parts by mass or more, and even more preferably 1 part by mass or more with respect to 100 parts by mass of the polymerizable compound used in emulsion polymerization. Furthermore, the total mass amount of the surfactant (A) and the surfactant (B) used is preferably 20 parts by mass or less, more preferably 15 parts by mass or less, and even more preferably 10 parts by mass or less with respect to 100 parts by mass of the polymerizable compound used in emulsion polymerization. In this range, not only the polymerization stability becomes excellent, but also the mechanical stability of the aqueous resin dispersion to be obtained becomes excellent.

The emulsion polymerization method is not particularly limited, and publicly known emulsion polymerization method can be widely adopted. Examples include a method in which, in water, the polymerizable compound is added in the presence of the surfactant composition. In emulsion polymerization, the polymerizable compound may be added in the whole amount at once or added portionwise in a plurality of times. Furthermore, the polymerizable compound can be added dropwise.

Further examples of the emulsion polymerization method include a method in which a pre-emulsion obtained by emulsifying in advance the surfactant composition and the polymerizable compound in water and an aqueous solution including a polymerization initiator are mixed. When the pre-emulsion and the aqueous solution including a polymerization initiator are mixed, the aqueous solution may be mixed in the whole amount at once, at least one of these may be mixed portionwise in a plurality of times, or at least one of these may be added dropwise. The preparation method for the pre-emulsion is not particularly limited, and examples include a method in which the surfactant composition is dissolved in water, the polymerizable compound is added thereto, and stirring is performed. In the preparation of the pre-emulsion, an organic solvent miscible with water, such as methanol, can be used in combination.

In emulsion polymerization, the reaction temperature is not particularly limited and, for example, may be 50 to 100°C and more preferably be 60 to 95°C. The reaction temperature may be kept constant from the initiation of the reaction or may be changed during the reaction. The reaction time in emulsion polymerization is not particularly limited and may be appropriately adjusted according to the proceeding of the reaction, and it is usually about 2 to 9 hours.

In emulsion polymerization, a polymerization initiator, a protective colloid agent, a chain transfer agent, and a crosslinking agent can be used. The kind of these is not particularly limited and can be the same as those that have been used in emulsion polymerization in the related art.

For example, examples of the polymerization initiator include persulfuric acid salts such as ammonium persulfate and potassium persulfate; peroxides such as hydrogen peroxide and benzoyl peroxide; and redox polymerization initiators in which a persulfuric acid salt and a reducing agent, such as an alkali metal sulfite salt or bisulfite salt, are combined.

In emulsion polymerization, a further additional component can be used. Examples of the component include

wetting agents, defoaming agents, foaming agents, foam stabilizers, thickeners, penetrants, water and oil repellents, plasticizers, preservatives, antifungal agents, disinfectants, rust inhibitors, chelating agents, antioxidants, ultraviolet absorbers, pH adjusters, freezethaw stabilizers, high boiling point-solvents, colorants such as inorganic pigments and organic pigments, fillers, metal powder, humectants, adhesion-imparting agents, vulcanizing agents such as zinc oxides, sulfur, and vulcanization accelerators, antiblocking agents, and flame retardants.

Through the above-described emulsion polymerization, the aqueous resin dispersion according to the present invention is obtained. The aqueous resin dispersion can be produced using a small amount of the surfactant composition, and thus the surfactant content included in the aqueous resin dispersion to be obtained can be made small. Even when the aqueous resin dispersion is obtained with a small surfactant amount, for example, even in the case where large shearing is applied when the aqueous resin dispersion is used, the occurrence of aggregates is prevented or reduced. It is because the aqueous resin dispersion has excellent mechanical stability.

EXAMPLES

Hereafter, the present invention will be described more specifically based on Examples, but aspects of these Examples are not intended to limit the present invention.

(Synthesis Example 1)

Into a reaction vessel equipped with a stirrer, a thermometer, and a reflux tube, 220 g (1.0 mol) of styrenated phenol (a mixture of monostyrenated phenol:distyrenated phenol:tristyrenated phenol = 80:19:1 (mass ratio)), 40 g (1.0 mol) of sodium hydroxide, and 210 g of acetone were charged, and the internal temperature was increased to 40°C while stirring was performed. Next, 91 g (1.2 mol) of allyl chloride was added dropwise thereto over 1 hour, and after the completion of the dropwise addition, a reaction was performed at 40°C for 2 hours. After the reaction product was filtered to remove the NaCl biproduced, acetone was removed under reduced pressure to thereby obtain allyl styrenated phenyl ether, and a further reaction was performed at 200°C for 5 hours to thereby obtain 2-allyl styrenated phenol.

A total of 268 g (1 mol) of the 2-allyl styrenated phenol obtained was transferred to an autoclave, and thereafter 440 g (10 mol) of ethylene oxide was subjected to an addition reaction therewith using potassium hydroxide as a catalyst under the conditions of a pressure of 0.15 MPa and a temperature of 130°C to thereby obtain polyoxyethylene propenyl styrenated phenyl ether.

Subsequently, the polyoxyethylene propenyl styrenated phenyl ether obtained was transferred to a reaction vessel equipped with a stirrer, a thermometer, and a nitrogen inlet tube and was thereafter subjected to a reaction with 97 g (1 mol) of sulfamic acid in a nitrogen atmosphere under the condition of a temperature of 120°C. Monoethanolamine was thereafter added thereto to adjust the pH of a 1% by weight aqueous solution to 7.5, and filtration was performed to remove the salt formed, thereby obtaining a surfactant (A) represented by a formula (I-1) below (in Table 1 presented below, referred to as "A-1").

[Chem. 4]

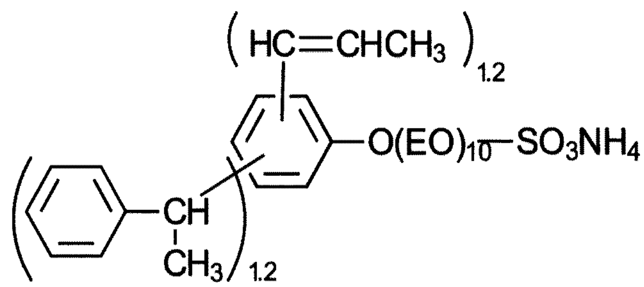

(I − 1)

(Synthesis Example 2)

Except that the amount of ethylene oxide used was changed to 880 g (20 mol), the same operation as in Synthesis Example 1 was performed to obtain a surfactant (A) represented by a formula (1-2) below (in Table 1 presented below, referred to as "A-2").

[Chem. 5]

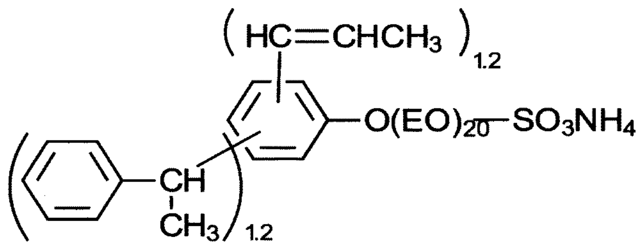

(I－2)

(Synthesis Example 3)

A total of 186 g (1 mol) of lauryl alcohol was transferred to an autoclave, and thereafter 132 g (3 mol) of ethylene oxide was subjected to an addition reaction therewith using potassium hydroxide as a catalyst under the conditions of a pressure of 0.15 MPa and a temperature of 130°C to thereby obtain a 3-mole ethylene oxide adduct of lauryl alcohol.

Subsequently, the polyoxyethylene lauryl ether obtained (the average number of moles of ethylene oxide added: 3) was transferred to a reaction vessel equipped with a stirrer, a thermometer, and a nitrogen inlet tube and was thereafter subjected to a reaction with 97 g (1 mol) of sulfamic acid in a nitrogen atmosphere under the condition of a temperature of 120°C. Monoethanolamine was thereafter added thereto to adjust the pH of a 1% by weight aqueous solution to 7.5, and filtration was performed to remove the salt formed, thereby obtaining polyoxyethylene lauryl ether sulfuric acid ester ammonium which was a surfactant (B) (the average number of moles of ethylene oxide added: 3, in Table 1 presented below, referred to as "B-1").

(Synthesis Example 4)

Except that lauryl alcohol was replaced with 200 g (1 mol) of branched tridecyl alcohol (product name: TRIDECANOL, manufactured by KH Neochem Co., Ltd.), the same operation as in Synthesis Example 3 was performed to thereby obtain polyoxyethylene branched tridecyl ether sulfuric acid ester ammonium which was a surfactant (B) (the average number of moles of ethylene oxide added: 3, in Table 1 presented below, referred to as "B-2").

(Synthesis Example 5)

Except that the amount of ethylene oxide used was changed to 220 g (5 mol), the same operation as in Synthesis Example 4 was performed to thereby obtain polyoxyethylene branched tridecyl ether sulfuric acid ester ammonium which was a surfactant (B) (the average number of moles of ethylene oxide added: 5, in Table 1 presented below, referred to as "B-3").

(Synthesis Example 6)

Except that lauryl alcohol was replaced with 268 g (1 mol) of oleyl alcohol, the same operation as in Synthesis Example 3 was performed to thereby obtain polyoxyethylene oleyl ether sulfuric acid ester ammonium which was a surfactant (B) (the average number of moles of ethylene oxide added: 3, in Table 1 presented below, referred to as "B-4").

(Synthesis Example 7)

Except that the amount of ethylene oxide used was changed to 660 g (15 mol), the same operation as in Synthesis Example 4 was performed to thereby obtain polyoxyethylene branched tridecyl ether sulfuric acid ester ammonium which was a surfactant (the average number of moles of ethylene oxide added: 15, in Table 1 presented below, referred to as "b-1").

(Examples 1 to 7, Comparative Examples 1 to 3)

The surfactants (A) and the surfactants (B) obtained in the individual Synthesis Examples were mixed in the corresponding mass proportions (% by mass) presented in Table 1 to thereby prepare surfactant compositions. In 107.15 g of water, 2.5 g of each surfactant composition was dissolved. To this, 123.75 g of butyl acrylate, 123.75 g of styrene, and 2.5 g of acrylic acid were added and emulsification was performed with a homomixer to thereby obtain a pre-emulsion.

Separately, 117.11 g of water and 0.25 g of sodium hydrogen carbonate which was a pH adjuster were charged

into a flask equipped with a dropping funnel, a stirrer, a nitrogen inlet tube, a thermometer, and a reflux condenser, 36.46 g of the pre-emulsion was added thereto, the temperature was increased to 80°C, and mixing was performed for 15 minutes. An aqueous solution prepared by dissolving 0.38 g of ammonium persulfate in 10 g of water as a polymerization initiator was added thereto to initiate a reaction. After 15 minutes following the addition of the polymerization initiator, the remaining pre-emulsion was added dropwise thereto over 3 hours and a further reaction was performed for 1 hour. Subsequently, an aqueous solution prepared by dissolving 0.12 g of ammonium persulfate in 10 g of water was added thereto, and a rection was performed for 1 hour. Cooling to 40°C was thereafter performed and the pH was adjusted to 8 with ammonia water to thereby obtain an aqueous resin dispersion.

(Evaluation Method)

[Polymerization Stability]

A total of 100 g of the aqueous resin dispersion was filtered through a 200-mesh metal gauze, and the residue was washed with water and thereafter dried at 105°C for 2 hours. Subsequently, the weight of the dried product was measured to thereby calculate the aggregate concentration (% by weight) in the aqueous resin dispersion. Separately, 1 g of the aqueous resin dispersion was dried at 105°C for 2 hours, and the weight of the dried product was measured to thereby calculate the solid content concentration (% by weight) in the aqueous resin dispersion. Using the calculated aggregate concentration and solid content concentration, the proportion of the aggregates was calculated according to a calculation equation below to thereby evaluate the polymerization stability by the criteria below. A lower proportion of aggregates indicates higher polymerization stability.

$$\text{(Proportion of aggregates (\% by weight))} = [\text{(Aggregate concentration)}/\text{(Solid content concentration)}] \times 100$$

A: less than 0.05% by weight
B: 0.05% by weight or more and less than 0.1% by weight
C: 0.1% by weight or more

[Mechanical Stability]

A total of 50 g of the aqueous resin dispersion was treated in a Maron tester under a load of 10 kg and at a rotation speed of 1000 rpm for 30 minutes. The resulting treated solution was filtered through a 100-mesh metal gauze, and the residue was washed with water and thereafter dried at 105°C for 2 hours to thereby collect the aggregates. The weight of the aggregates was measured, and according to the same calculation equation as used for the polymerization stability, the proportion of the aggregates (% by weight) was calculated to thereby evaluate the mechanical stability by the criteria below. A lower proportion of aggregates (% by weight) indicates higher mechanical stability.

A: less than 0.05% by weight
B: 0.05% by weight or more and less than 0.1% by weight
C: 0.1% by weight or more and less than 0.2% by weight
D: 0.2% by weight or more and less than 0.3% by weight
E: 0.3% by weight or more

[Chemical Stability]

To 10 g of the aqueous resin dispersion, 10 mL of an aqueous solution of calcium chloride having a predetermined concentration was added, stirring was thereafter performed for 5 minutes, and the occurrence or non-occurrence of aggregates was visually confirmed. Here, the concentration of the aqueous solution of calcium chloride was 0.05 mol/L or 0.1 mol/L, and the lowest concentration at which the aggregates occurred was determined to thereby evaluate the chemical stability by the criteria below. A larger resulting numerical value indicates higher chemical stability.

A: No aggregates occur even at 0.1 mol/L.
B: Aggregates occur at 0.1 mol/L.
C: Aggregates occur at 0.05 mol/L.

[Low-Foaming Properties]

A total of 20 mL of the aqueous resin dispersion and 10 mL of water were placed into a 100-mL Nessler tube, subjected to inverting 30 times, and thereafter were left to stand. The amount of foam (mL) after 5 minutes was measured to thereby the low-foaming properties were evaluated by the criteria below. A smaller amount of foam indicates better characteristics.

A: The amount of foam is less than 20 mL.
B: The amount of foam is 20 mL or more and less than 30 mL.
C: The amount of foam is 30 mL or more and less than 40 mL.
D: The amount of foam is 40 mL or more.

[Wettability to Base Material]

The aqueous resin dispersion was diluted twice with water to prepare a measurement sample, and using this sample, the surface tension at 25°C (mN/m) was measured with a Wilhelmy surface tension meter to thereby evaluate the wettability to the base material by the criteria below. A lower surface tension indicates higher wettability to the base material.

A: The surface tension is less than 30 mN/m.
B: The surface tension is less than 40 mN/m.
C: The surface tension is 40 mN/m or more.

[Water-Whitening Resistance]

The obtained aqueous resin dispersion was applied to a glass plate such that the dry film thickness was 120 μm and was dried in an atmosphere of 20°C × 65% RH for 24 hours to thereby make a test specimen having a coating film. This test specimen was immersed in ion-exchanged water at 25°C, and the moisture on the surface of the test specimen was removed. This was placed on paper on which 10-point characters had been printed and the visibility or invisibility of the characters was visually confirmed. This operation was repeatedly performed, and the immersion time until the characters became invisible was measured to thereby evaluate the water-whitening resistance by the criteria below. A longer immersion time indicates a better water-whitening resistance.

A: The characters are visible even after immersion for 3 days.
B: The characters become invisible after immersion for 3 days.
C: The characters become invisible after immersion for 1 day.

[Table 1]

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Surfactant (A) | A-1 (% by mass) | 50 | 50 | 60 | 70 | 50 | 50 | - | 100 | - | 50 |
| | A-2 (% by mass) | - | - | - | - | - | - | 50 | - | - | - |
| Surfactant (B) | B-1 (% by mass) | 50 | - | - | - | - | - | - | - | - | - |
| | B-2 (% by mass) | - | 50 | 40 | 30 | - | - | 50 | - | 100 | - |
| | B-3 (% by mass) | - | - | - | - | 50 | - | - | - | - | - |
| | B-4 (% by mass) | - | - | - | - | - | 50 | - | - | - | - |
| Surfactant | b-1 (% by mass) | - | - | - | - | - | - | - | - | - | 50 |
| Evaluation Item | Polymerization stability | A | A | A | A | A | A | A | A | A | A |
| | Mechanical stability | C | A | A | A | A | B | B | E | E | E |
| | Chemical stability | B | B | B | A | A | B | A | A | C | B |
| | Low-foaming properties | B | B | B | B | B | A | B | A | D | C |
| | Wettability | B | A | A | A | A | B | A | C | B | A |
| | Water-whitening resistance | B | A | A | B | A | B | B | B | A | C |

Table 1 presents the kinds of the surfactant compositions prepared in the individual Examples and Comparative Examples, the use proportion (the mass proportion of each surfactant with respect to the whole amount of the surfactants), and the evaluation results.

Table 1 reveals that when a surfactant composition including a specific surfactant (A) and a specific surfactant (B) was used, the stability of emulsion polymerization was excellent and the obtained aqueous resin dispersion had excellent mechanical stability. The aqueous resin dispersions obtained in the individual Examples had excellent chemical stability, low-foaming properties, wettability, and water-whitening resistance.

On the other hand, it is revealed that, as in Comparative Examples 1 and 2, when a surfactant (A) and a surfactant (B) were each used alone, the mechanical stability of the aqueous resin dispersion was poor. Furthermore, as in Comparative Example 3, when a specific surfactant (A) and a surfactant (b-1) having a repeating number of an oxyalkylene unit of greater than 10 were used in combination, an aqueous resin dispersion having excellent mechanical stability was unable to be obtained.

## Claims

1. A surfactant composition comprising: a surfactant (A); and an anionic surfactant (B) having no radical polymerizable substituent, wherein
the surfactant (A) is a compound represented by a general formula (I) below

[Chem. 1]

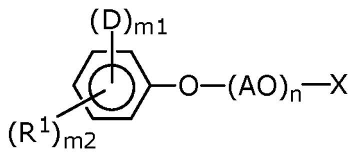

· · · (I)

(wherein D represents a polymerizable unsaturated group represented by either of formulas (D-1) and (D-2) below

[Chem. 2]

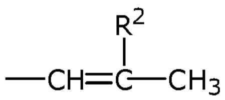

(D-1)

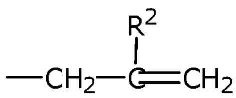

(D-2)

in which each $R^2$ represents a hydrogen atom or a methyl group;
$R^1$ represents at least one kind of group selected from the group consisting of formulas (R-1), (R-2), and (R-3) below;

[Chem. 3]

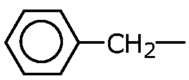

(R-1)

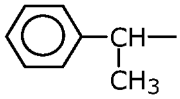

(R-2)

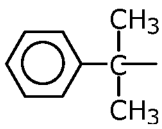

(R-3)

m1 is 1 to 2, m2 is 1 to 2, and a sum of numbers m1 and m2 is 2 to 3; A represents an alkylene group or a substituted alkylene group having a carbon number of 2 to 4; n is an average number of moles of alkylene oxide added and is 1 to 1000; and X represents an anionic hydrophilic group represented by either of
$-(CH_2)_a-SO_3M$ (in which a is a number 0 to 4),
$-(CH_2)_b-COOM$ (in which b is a number 0 to 4),
$-PO_3M_2$,
$-P(Z)O_2M$ (in which Z represents a residue in which X is removed from the formula (I)), and
$-CO-CH_2-CH (SO_3M)-COOM$
(in which each M represents hydrogen, an alkali metal, an alkaline earth metal, an ammonium residue, or an alkanolamine residue)) and
the surfactant (B) contains a polyoxyalkylene group which has a repeating number of an oxyalkylene unit of 1 to 10.

**2.** The surfactant composition according to Claim 1, wherein the surfactant (B) is at least one kind selected from the group consisting of a polyoxyalkylene styrenated phenyl ether sulfuric acid ester salt, a polyoxyalkylene alkyl ether sulfuric acid ester salt, and a polyoxyalkylene alkenyl ether sulfuric acid ester salt.

**3.** The surfactant composition according to Claim 1 or 2, wherein 40 to 200 parts by mass of the surfactant (B) is included with respect to 100 parts by mass of the surfactant (A) .

**4.** An aqueous resin dispersion obtained by subjecting a polymerizable compound to emulsion polymerization in a presence of the surfactant composition according to any one of Claims 1 to 3.

**5.** A production method for an aqueous resin dispersion, the method comprising a step of obtaining an aqueous resin dispersion by subjecting a polymerizable compound to emulsion polymerization in a presence of the surfactant composition according to any one of Claims 1 to 3.

**INTERNATIONAL SEARCH REPORT**

International application No.
PCT/JP2019/040841

A. CLASSIFICATION OF SUBJECT MATTER
Int.Cl. B01F17/12(2006.01)i, B01F17/20(2006.01)i, B01F17/42(2006.01)i, C08F2/24(2006.01)i, C08F2/26(2006.01)i, C08F290/06(2006.01)i

According to International Patent Classification (IPC) or to both national classification and IPC

B. FIELDS SEARCHED

Minimum documentation searched (classification system followed by classification symbols)
Int.Cl. B01F17/12, B01F17/20, B01F17/42, C08F2/24, C08F2/26, C08F290/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | WO 2016/076115 A1 (DKS CO., LTD.) 19 May 2016 & US 2017/0306192 A1 & EP 3219775 A1 & KR 10-2017-0083029 A & CN 107109174 A & TW 201617424 A | 1-5 |
| A | WO 2013/108588 A1 (DKS CO., LTD.) 25 July 2013 & US 2014/0323753 A1 & EP 2805974 A1 & CN 103797034 A & KR 10-2014-0049589 A & TW 201335195 A | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 December 2019 (06.12.2019) | 17 December 2019 (17.12.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/040841

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-053119 A (DKS CO., LTD.) 05 April 2018 & EP 3508532 A1 & CN 109790369 A & KR 10-2019-0059895 A | 1-5 |
| A | JP 2015-013921 A (DKS CO., LTD.) 22 January 2015 & US 2016/0137755 A1 & EP 3017864 A1 & TW 201506044 A & CN 105263613 A & KR 10-2016-0029025 A | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000033255 A